# EUROPEAN PATENT APPLICATION

(11) **EP 2 907 931 A2**
(43) Date of publication of application: **19.08.2015**
(21) Application number: 15155237.9
(22) Date of filing: 16.02.2015
(51) Int. Cl.: E04B 1/343, B60P 3/32

(54) **Improvements to static home structures**

(30) Priority: 14.02.2014 GB 201402595
(71) Applicant: Willerby Holiday Homes Limited, Hull, HU9 5NA (GB)
(72) Inventor: Drury, Paul, Hull, Yorkshire HU9 5NA (GB); Dennett, William, Hull, Yorkshire HU9 5NA (GB); Garmston, Gavin, Hull, Yorkshire HU 9 5NA (GB); Bateman, Alan, Hull, Yorkshire HU9 5NA (GB)
(74) Representative: Wood, Graham

(57) **Abstract**

A static home structure, and method for forming the same is provided. The structure includes a base with side walls and end walls depending upwardly therefrom, and a roof, the base can be formed with a chassis and floor, or just a floor and is supported a distance from a support surface by one or more support members and/or wheel assembly. The base floor, side walls, end walls, and/or roof are formed from panels which are formed with spaced apart internal and external layers joined to at least one intermediate layer of insulating material. The structure can be formed from one or more modules placed and bonded together thereby provided a structure with improved structural integrity.

## Description

The invention to which this application relates is to improvements in a structure for accommodation and specifically, an accommodation structure in the form commonly referred to, and referred hereonin in a non-limiting manner, as a static home.

The static home structure is of a form which, typically, is provided in an at least partially assembled form at a location of manufacture and transported to its final location as a whole, or alternatively, as a number of parts to be assembled on a prepared site. When in position on the site the floor or base of the structure, is located at a spaced distance from the ground on which the structure is supported. Static home structures of this type are well known and are most typically provided in groups at locations which are often referred to as holiday parks. The static home structures are typically provided to be used as permanent or semi-permanent accommodation and with a life span which is less than that of houses or apartment accommodation in building with foundations.

The method of manufacture and the form of static home structures, has remained largely unchanged for a number of years and typically comprises the provision of a chassis formed from a series of interconnected metal beams, said chassis including thereon one or more support struts and typically a wheel assembly. The wheel assembly is provided so as to allow the static home structure to be moveable, although, in practice, it is estimated that the static home structure will typically travel no more than a distance of 1 mile in total on the wheels provided, which is typically from the point of manufacture onto transport means in order to transport the structure to the final location and then from the transport means to the site on the which the structure is to be located.

A wooden frame is then formed on the chassis and this forms the floor of the structure and side and end wall frames are formed to depend upwardly from the floor and the roof structure is then positioned thereover. The floor, side walls, end walls and roof are all typically formed of frame structure formed of wooden battens and are clad on the external and internal faces by sheets of plywood. The cavities defined between the sheets of plywood and the wooden battens receive insulation material and the depth of the same can be selected to suit particular required insulation values of the structure. Once the floor, side walls, ends walls and roof are in position, the interior of the structure is fitted out. At this stage the structure which has been formed is subject to significant flexibility and, as such, it is conventionally the case that part of the internal fitting out of the structure is to provide bulk heads at positions intermediate the side and end walls and which join the side walls to the floor and/or side walls to end walls in a manner so as to increase the rigidity of the static home structure which is formed. The need to do this in the internal fit out means that the internal layout design options are relatively limited and therefore the layout which is used is common to a large range of the static home structures made by different manufacturers. It also therefore significantly limits the scope to change the designs of the internal layout of the static home structures and it is believed that this can reduce the attractiveness of this type of structure for purchase due to the fact that a number of areas within the internal layout, such as the dining area, kitchen, bathroom, bedroom etc are substantially fixed in their form due to the need to provide rigidity to the structure which is formed and cannot be easily adapted to suit specific requirements.

A further problem with this conventional approach is that the manner in which the structure is formed means that each particular structure may be formed in a slightly different manner such as, for example, the size and positioning of the cable runs, utility runs and so on through the walls and floor of the structure may differ due to the particular persons that manufactures a particular part of the structure. Furthermore, the chassis which is used is inherently flexible and also takes up significant space on the underside of the floor of the structure such that the space between the floor and the ground is not available for other uses.

A further problem is that while insulating material can be placed into the cavities defined by the wooden battens and sheets of plywood, it may not always be possible to fill the entire cavity area with the insulating material so that there may be spaces in the cavity, and/or the wooden battens act as cold bridges so that in the conventional walls, floor and roof there are numerous "cold" or "hot" spots and thereby allow the loss of heat from the interior of the structure in cold environments and the gaining of heat in the interior in hot environments. It also means that the structures are not as environmentally efficient as would be desired or required especially when the same are used in relatively inclement environments where there are extremes in temperature.

The aim of the present invention is therefore to provide a static home structure and method of forming the same in which the manufacture of the structure is more efficient, allows greater flexibility in the internal layout of the same and has increased rigidity and structural integrity.

In a first aspect of the invention, there is provided A static home structure, said structure comprising a base with side walls and end walls depending upwardly therefrom, and a roof, said base supported a distance from a support surface by one or more support members and/or wheel assembly and any or any combination of said base, side walls, end walls, and/or roof is formed of at least one panel which includes an internal surface layer and an external surface layer which are spaced apart by an intermediate layer of insulating material.

Typically the panels used are of a type known as a structural insulated panel (SIP).

In one embodiment, the base is mounted on a chassis on which the wheel assembly and/or support members are formed.

In another embodiment the base includes therein one or more members to which a wheel assembly and/or support members are connected. Typically, the members in the base are reinforcement members in the form of metal and are located within the panel or panels used to form the base so as to be provided at the required locations for the support members and/or wheel assembly to be connected thereto.

Typically with the exception of the support members and wheel assembly, no other parts of the static home structure depend below the underside of the chassis. In one embodiment the base acts to form the floor and the chassis of the structure.

In one embodiment, the said panels are formed from a first layer of wood or wood composite, and a second layer of wood or wood composite, with the said first and second layers spaced apart by foamed insulation material which is located intermediate the first and second layers.

In one embodiment a frame is located between the said first and second layers.

In one embodiment the said insulating material and first and second layers and/or frame are adhered together to form a substantially unitary panel which is then used alone, or in combination with other of the said panels, to form the base, side walls, end walls and/or roof.

In one embodiment, each of the base, side walls, end walls and roof are manufactured from one or more of the panels.

In one embodiment, the side walls and/or end walls are each formed by a single panel which may be cut to the required dimensions and/or to form services channels or trunking therein..

Preferably, at least the external faces of the panels for use in forming the base, side walls and/or end walls, consists of a further layer.

In one embodiment, the further layer is formed of glass reinforced plastic or, in alternative embodiments may be formed of steel or aluminium or another material which is suitable to provide a reinforcing and/or decorative effect.

In one embodiment, the base is formed of a plurality of panels, with, in one embodiment, each panel provided as a floor of a module with the structure formed from a plurality of the modules located on the chassis.

In one embodiment, the roof is also formed of one or more of the panels and is bonded to the side walls and end walls by adhesive.

If required, additional mechanical attachment means may also be provided, typically to allow the initial securing of the walls and roof in position, but it is envisaged that the use of adhesive alone will be sufficient to form the static home shell formed by the base, side walls, end walls and roof.

In one embodiment, the internal layout of the structure is formed from one or more modules which can be at least partially formed prior to placement of the module into the internal space of the structure. For example, in one embodiment, a module may form the kitchen, a second module may form the bathroom, a third module may form the lounge area and a further module may form the bedroom.

In one embodiment the modules are populated with at least one of the required items of furniture prior to the same being placed and secured in position on the chassis.

Typically, as the structure formed in accordance with the invention has sufficient rigidity and strength in its own right, there is no, or a reduced, need to use internal components of the structure as a means of strengthening or adding to the rigidity of the structure and therefore the components and furniture to be provided can be positioned in a more flexible layout and hence allow more flexible design possibilities to be achieved.

In a further aspect of the invention there is provided a method of manufacture of a static home structure, said method comprising the steps of forming the base, side walls, end walls and/or roof from panels comprising first and second layers of sheet material spaced apart by an intermediate layer of insulation material, forming the panels to the required shapes, forming a plurality of modules representing different parts of the structure, placing and securing the modules, once formed, in position on a chassis to form the internal structure with end walls, and securing the side walls and roof panels to the chassis and/or modules to enclose and complete the formation of the structure.

Typically the internal cavity is enclosed by joining the roof to the end and side walls.

In one embodiment the method includes the steps of providing reinforcement members on the chassis and/or base at specific locations to allow attachment thereto of a wheel assembly and/or support members to allow the structure base to be spaced from a support surface via said support members and/or wheel assembly.

In one embodiment the base and at least partially upwardly on the side walls and end walls are rendered substantially waterproof so as to prevent a barrier to flooding of the internal cavity from water outside of the mobile home structure when on site.

In one embodiment the space between the underside of the base or chassis and the support surface such as the ground may include utility supply runs at or on the underside of the base and is available for the storage of goods and/or provision of other facilities. In one embodiment the structure includes one or more storage containers locatable between the base and the support surface and which, in one embodiment, can be attached to the static home structure. In one embodiment the storage containers are accessible from the internal cavity of the structure and through the base therein. In another embodiment the space between the underside of the base and the support surface is utilised for the location of water storage, water heating means and/or other storage uses and/or may be provided with means to aid the floatation of the structure. In a yet further embodiment pet or animal kennels may be located on the underside of the base, and in one embodiment attached thereto so that the kennels are protected from the external environment, and the animal cannot escape externally as the kennel can only be entered from the interior of the static home, typically through a trapdoor formed in the base of the structure.

In one embodiment one or more portions of the structure can be removed subsequent to the formation of the structure in order to allow the removed portion to be repaired and/or the provision of alternative or additional facilities to be provided with the structure and then the same or a replacement portion can be joined back to the structure. Thus, in accordance with the invention the whole structure does not need to be removed from site to allow repair or alteration work to be performed.

In one embodiment the side walls, roof and/or base portions can be made from a number of the said panels which are joined together, and the external surface of the side wall, base and/or roof is formed by a continuous sheet of sheet material such as GRP, metal or other suitable material so as to form a continuous external surface on each side wall or end wall.

In one embodiment the base of the structure may support a plurality of wheel assemblies at spaced locations and the base includes supporting members located therein at the suitable locations thereon.

In another aspect of the invention there is provided a module for fitment in an internal cavity of a mobile home structure, said module provided to define an area of the internal cavity of the structure and is at least partially fitted with apparatus and/or utility connections prior to being introduced into the internal cavity.

Typically, one or more additional structures can be provided which are formed of a number of panels in accordance with the invention and the structures are provided to be fitted to the static home structure in order to provide an additional component thereof, such as, for example, a porch, or additional elements for the roof section to extend the length of the roof further out from the side walls of the structure. This is particularly important in countries where there is a heavy snowfall risk. The additional structures are therefore provided as an engineered structure using panels in accordance with the invention.

In one embodiment the static home structure is formed as one unit using the panels to form at least the floor and chassis of the structure. In another embodiment the static home structure is formed of two parts which are transported to site separately and then joined together to form the static home structure with again at least the base and chassis formed using the panels in accordance with the invention.

Specific embodiments of the invention will now be described with reference to the accompanying drawings; wherein
Figures 1a- b illustrate side, end and plan elevations of a mobile home structure formed in accordance with one embodiment of the invention;
Figures 2a-g illustrate the base, side wall, and end wall components in accordance with one embodiment of the invention;
Figures 3a- b illustrate components which can be supported on the base in accordance with one embodiment of the invention;
Figure 4 illustrates the internal cavity of the structure being formed in accordance with one embodiment of the invention;
Figure 5 shows a portion of a panel used to form the walls, roof and/or base of the structure in accordance with one embodiment;
Figure 6 illustrates a possible manufacturing layout embodiment for the structure in accordance with the invention;
Figures 7a-c illustrate an embodiment of the outer skin of the structure in accordance with the invention; and
Figure 8 illustrates an embodiment of the assembly method in accordance with the invention..

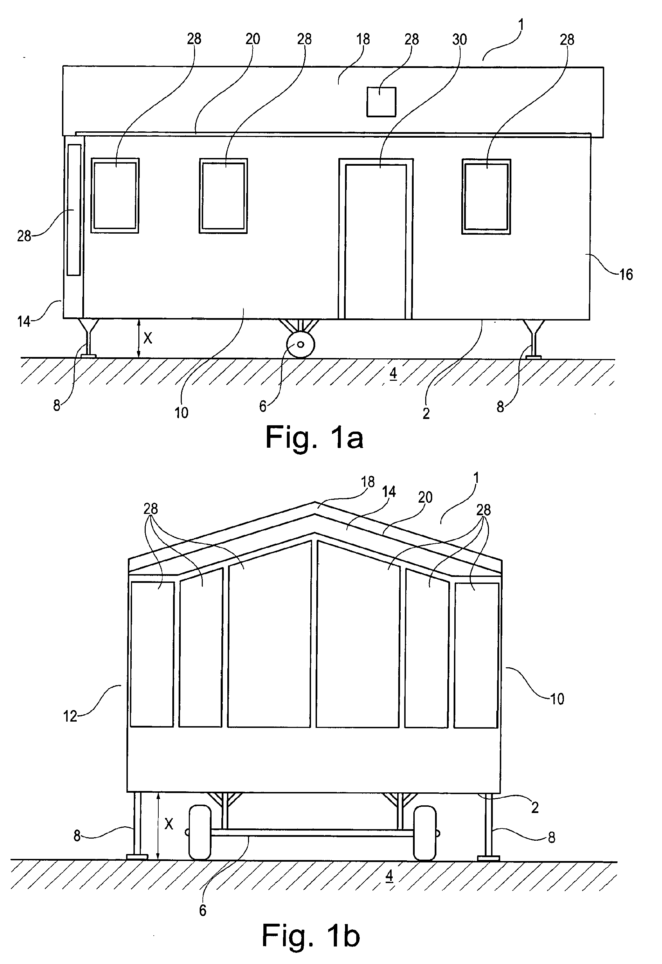

Referring firstly to Figures 1a- c there is shown a static home structure 1 in accordance with one embodiment of the invention. It should be appreciated that these Figures show only one of a wide range of structure designs and layouts which can be achieved using the invention and therefore the examples shown do not limit the scope of the protection.

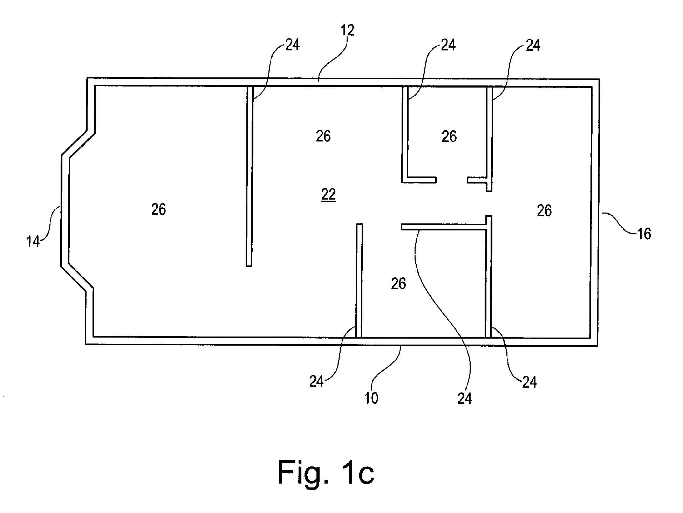

The structure include a base 2 which is located at a spaced distance X from a support surface 4 by a wheel assembly 6 and support arms 8. Depending upwardly from and attached to the edges of the base 2 are side walls 10,12 and end walls 14,16 which define the walls of the structure. A roof 18 is provided which is attached to the top edges 20 of the end walls 14,16 and sidewalls 10,12 to form the structure and define an internal cavity 22, an example of which is shown in Figure 1c with the roof removed and which provides the living area for users of the structure. Internal walls 24 and living areas 26 can be defined and the layouts shown in Figure 1c are for the purposes of illustration only and the internal layout in accordance with the invention can be extremely flexible. A series of windows 28 and doors 30 can be provided at the appropriate locations as required within the side walls, end walls and roof to allow access and light to be provided.

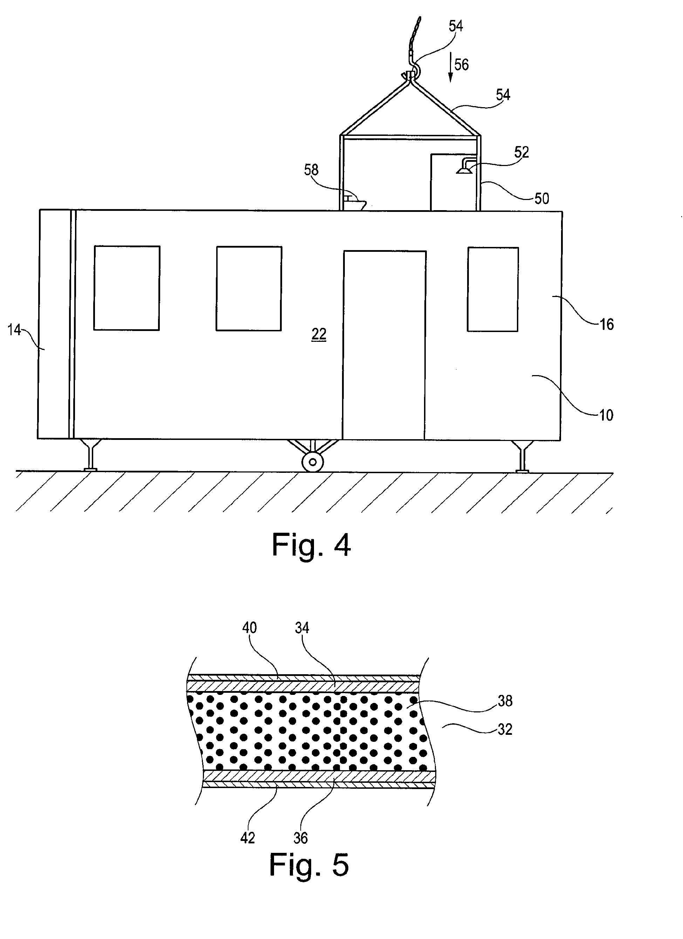

In accordance with the invention the structure is formed by the use of a number of Structural Insulated Panels and these are illustrated in greater detail in Figure 5 which illustrates a cross sectional view through a portion of a panel 32 of the type which is used in accordance with the invention. The panel comprises a layer 34 of plywood or a wood composite and a second layer 36 of wood or wood composite and, intermediate the layers 34,36 there is provided a foam insulating material 38 such as a closed cell extruded polystyrene foam which is adhered to the layers 34, 36 and therefore forms an integral structural panel therewith. In addition an internal layer 40 of a coating such as wallpaper or paint for those panels to be used to form the side/end walls or roof, or veneer or carpet for the panels used to form the base can be applied to the layer 34 to form the internal face of the panel when in position with a decorative and/or functional effect. An external layer 42 may be attached to the layer 36, such as a layer of GRP, to form the external face of the panel. When formed, the panel acts as a single integral member and may be used alone to form a base, side wall, end wall or roof of the required dimension or can be joined to one or more further panels to form the said base, side wall, end wall, or roof of the required dimension.

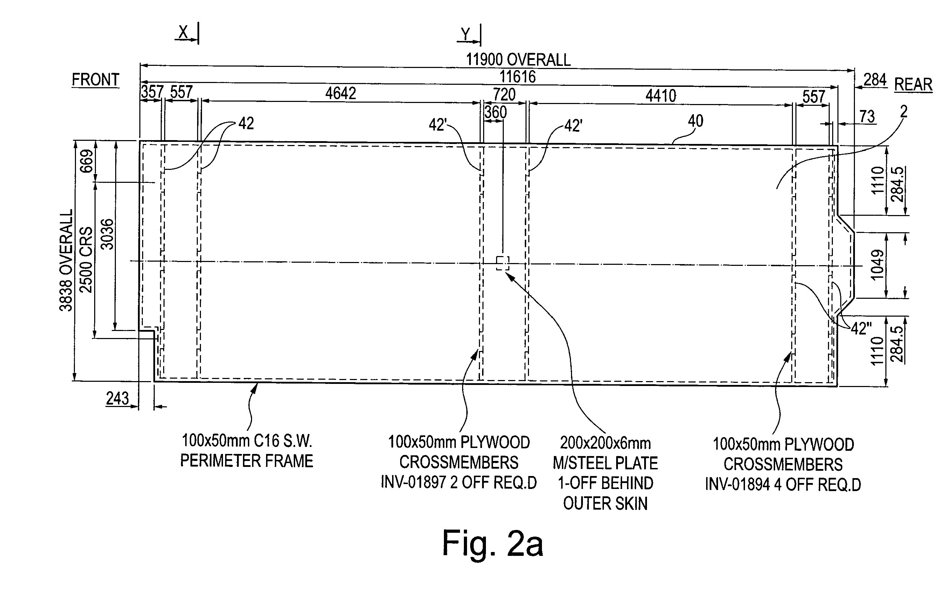

Figures 2a-e illustrate the portions used to form the structure and in Figure 2a there is illustrated the base 2 which is formed with peripheral edge 40 of a shape and dimension to which the lower edges of the side and end walls, 10-16 will be adhered, typically by using an appropriate adhesive applied between the same. In one embodiment the peripheral edge may be formed of wooden battens which are attached to the panels.

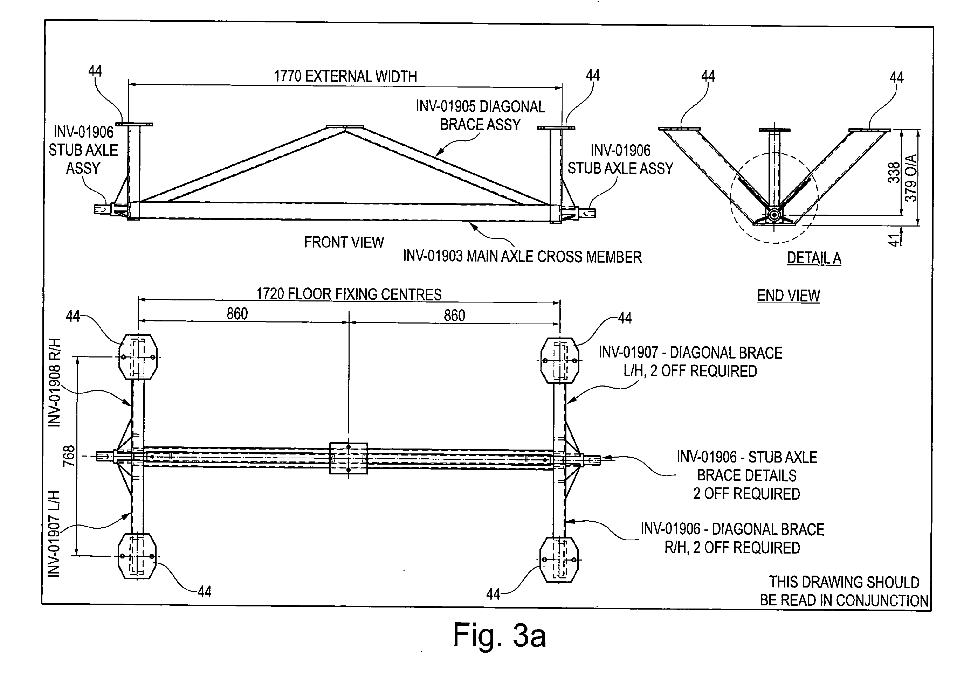

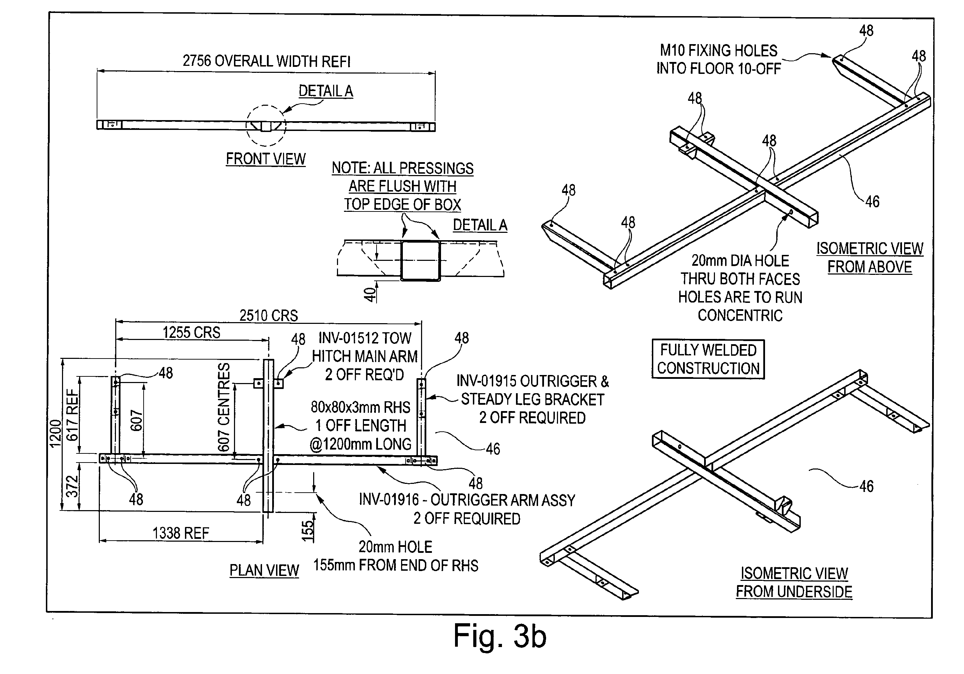

Also provided, in this embodiment, as part of the base are reinforcing members 42 at selected locations and these members are typically embedded within the foam layer of the panels such that they do not protrude from the underside of the base. However they are located so as to provide reinforced locations such that members 42' allow the attachment of the plates 44 of the wheel assembly 6 shown in Figure 3a (without the wheels) to the underside of the base. Figure 3b illustrates a tow hitch subframe assembly 46 and which has apertures 48 to allow the same to be fitted to the reinforcement members 42".

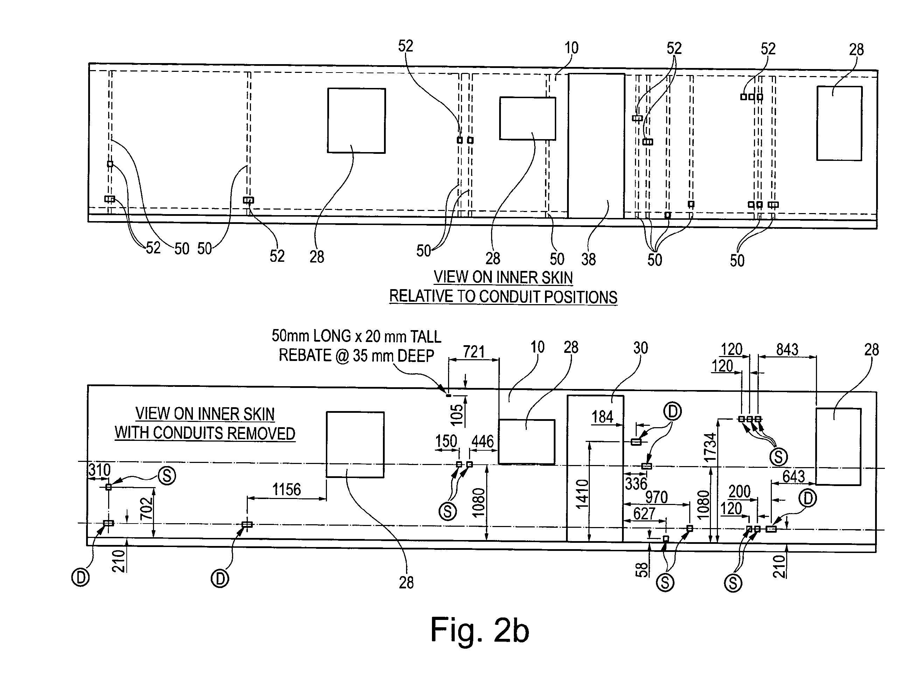

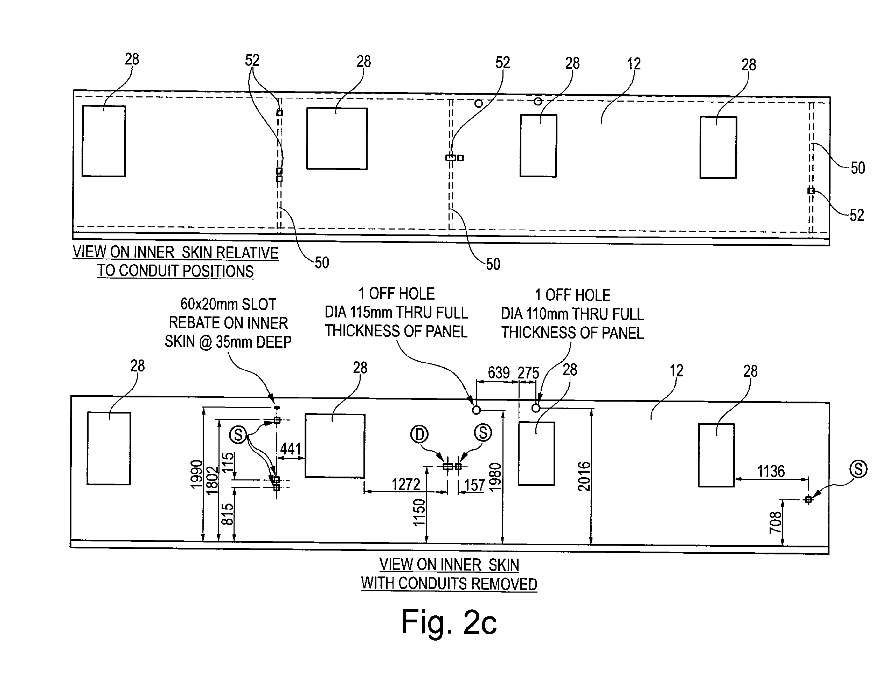

The side walls 10,12 are illustrated in Figures 2b and c and it can be seen how the windows and doors can be formed by cutting the same at the required locations in the panel or panels used to form the side wall. The apertures which are formed can then receive the frames for the window or door and, in accordance with the invention, the frames which can be used are of a conventional dimension. Trunking 46 can also be formed into the panel to a required depth into the panel so that the trunking is accommodated within the panel as shown, typically by milling machines for the location of electricity and/or water connections and it will be appreciated that because suitable machinery, such as a CNC router, can be used to form the trunking, the trunking can be provided at the same locations on each panel when used for the formation of structures of the same design so that there is increased uniformity in the manufacturing process and allow the most efficient trunking routes to be used. In turn, the provision and location of the sockets 52, taps and the like can be optimised.

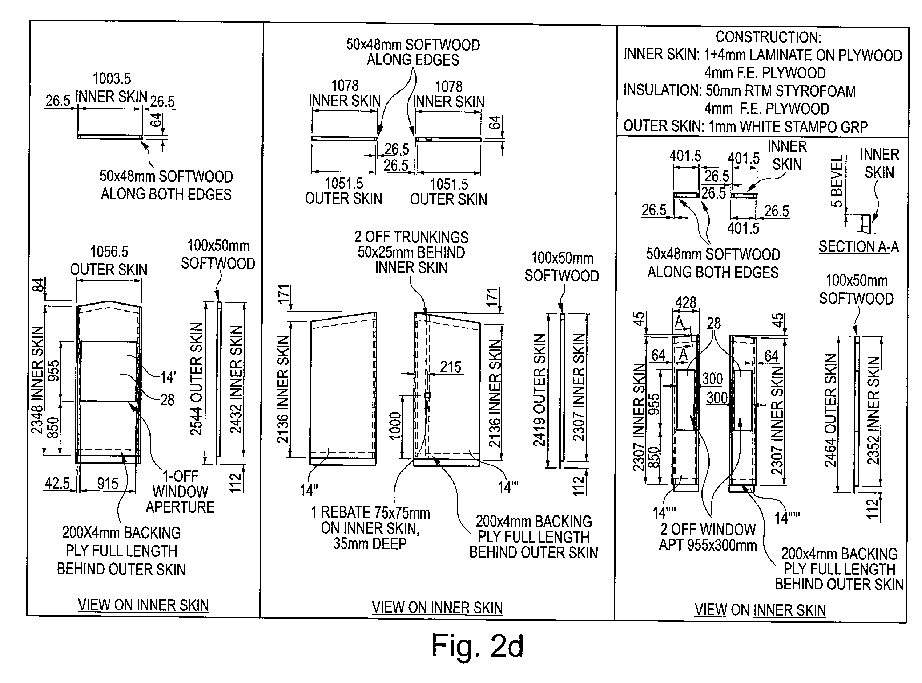

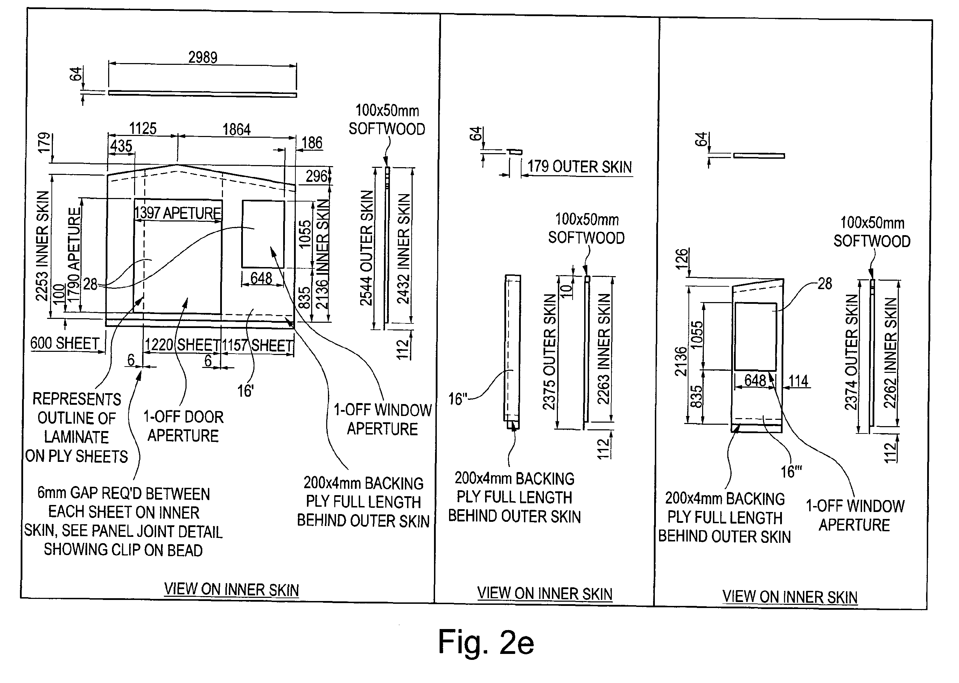

Figures 2d and e illustrate the respective end walls 14, 16 and the formation of the same in each case form a series of panels 14' -14""' and 16'-16"' respectively in order to allow the end walls to be formed to the required dimension and shape and so it will be appreciated that one or more panels can be used to form each part.

Figure 4 illustrates the elevation shown in Figure 1a with the roof not having yet been fitted in position. Also shown is a module 50 being lowered into position into the internal cavity 22 via lifting apparatus 54 in the direction of arrow 56, and the module will be secured to the side walls, end walls and/or base as appropriate. The module is at least partially formed prior to being moved into position, with the same already having shower fittings 52 and sink 58 located therein. Thus, once installed, the module need only be connected to the existing plumbing connections in the walls. This can be repeated for other living areas of the internal cavity 22 and so a larger percentage of the fitting out work can be done in the modules and at bays which need not be part of the assembly line, which allows greater space to be available and more efficient manufacturing to be performed. Once all of the required modules are in position, the roof can then be joined to the side and end walls to enclose the internal cavity.

The panels are integrated units, with the joins between the plywood layers offset to any joins between the insulating material layer and the panels are strong under tension which is further enhanced by the provision of the GRP material layer. The present invention also means that no separate chassis is required to be provided and the reinforcing members can be integrated within the base of the structure.

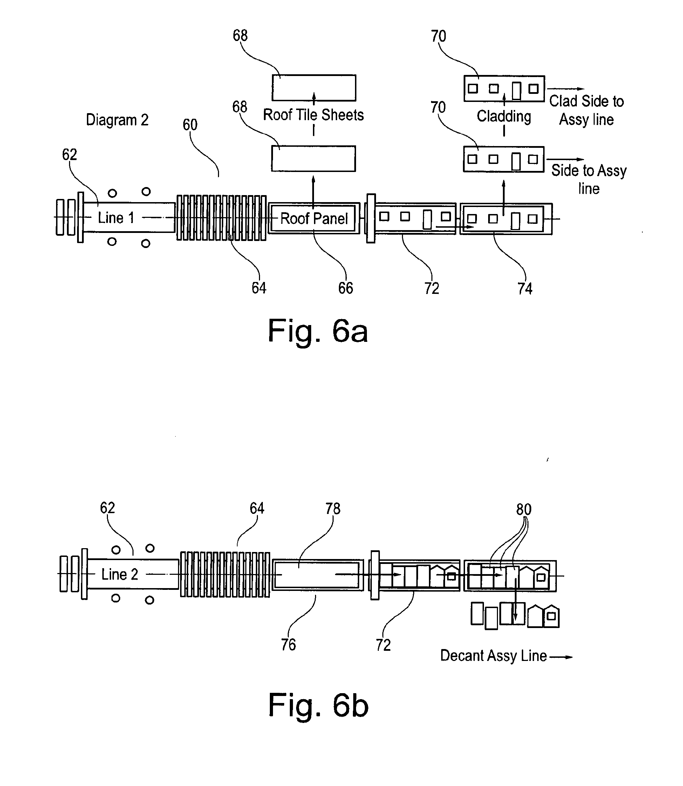

Turning now to Figure 6 there is illustrated one embodiment of a manufacturing method to form the panels to be used in forming the structure in accordance with the invention. First production line 60 includes several formation stages, these including a frame-up and bonding stage 62 at which the preassembly of the composite panel layers is performed. Typically the panel manufacturing process combines a decorative 5mm plywood wallboard inner skin with reinforcement components positioned thereon and which reinforcements can include expanded metal plates to allow the screwing of fixings into the composite wall for furniture mounting.

Adhesive, such as a PU adhesive is then applied to the inner skin assembly along the full length of the panel, typically via a moving gantry portal. Pre-cut external timber frame components are then loaded into the adhesive coated panel and joined to form an internal frame side wall frame. Any required aperture frame components are also added at this point along with insulating material sheets to complete the core and inner skin assembly. A final coating of adhesive is then applied and an outer skin of aluminium or GRP is adhered to form the outer skin and hence form the composite panel assembly.

The panel is then formed by placing the same into a heated press 64 which cures the composite panel which, in one embodiment, includes an inner frame, a core of insulating material, and inner and outer skin layers, to a finished useable condition. The heated press 64 may, in one embodiment, be operated at a temperature range in the region of 35 to 40 deg C. A decant table 66 allows finished panels which are not required to be cut to shape, i.e the panels 68 to be used to form the roof, to be removed from the lines and moved into position and be ready for use in forming the structure. Other panels 70, such as those for the side walls, may be required to have their outer edges cut to a specific shape or to have channels formed therein for wiring or plumbing, or to have apertures formed for windows, doors, ventilation or the like, and these are passed to a router, such as a CNC router 72, is provided to achieve that. A further stage 74 allows the decanting of the composite side panels 70 after the CNC process, ready to be used in the construction of the structure. Typically, the side panels will require the apertures to be routed including: windows, vents, door way and flue apertures.

A further line 76 can be provided as shown in Figure 6b which has the same equipment and processes as that shown in Figure 6a but this line is used to manufacture and form panels for the floor, front and rear of the structure and/or partition walls. The floor may be formed of a plurality of panels 80 cut from a larger panel 78 by the router apparatus.

In one embodiment the internal walls may be manufactured in a conventional way or can be formed from modular units positioned within the cavity defined by the floor, side and end walls and before the roof is placed in position.

The use of the panels in accordance with the invention allows the use of GRP or Aluminium external finishes which are part of the external composite skin and so provides opportunities to produce unique external decorative effects which cannot be conventionally achieved. The conventional approach requires the external members to be heavily ribbed in order to provide adequate levels of stiffness to the unsupported aluminium panel. However, in accordance with the invention, as the outer skin is bonded to the composite core the outer skin has the required stiffness and therefore need not be ribbed or confined by the requirement for structural stiffness.

Furthermore, the quality of the exterior finish is improved and the undulations conventionally seen on the exterior surfaces of static home structures due to irregularities in the timber frame work and separate panel joints are eliminated. The current use of exterior visible screws is eliminated as the panel for a side wall can be produced in one piece and hence there would be no need to have joints visible as with the current structure.

In one embodiment an external finish can be produced using either of a swaging process or by printing. The swaging method allows rib designs to be produced without the need for very deep ribbing effects and in which plain aluminium sheet material is swaged to provide the required pattern effect.

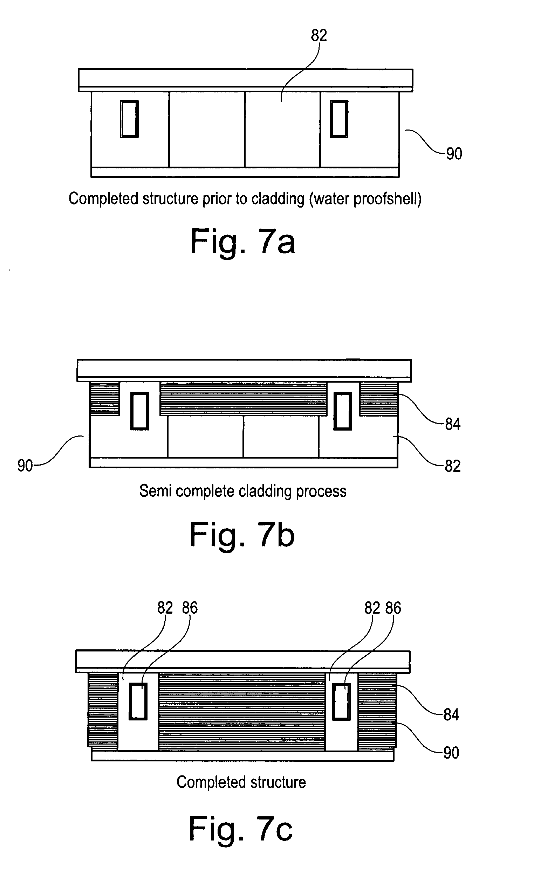

As an alternative, GRP Composite outer skins which span the entire wall with a single sheet can be used to provide a water proof barrier and this can be produced with a required finish and if required external cladding can be applied thereto. A further possibility is to use a combination of GRP sheet material which have a particularly high quality or expensive decorative finish with a lower quality or cheaper GRP sheets and possibly to also use cladding to allow a combined cladding and GRP effect external appearance for different sections of the structure. An example of the stages followed to achieve this finish is shown in Figures 7a-c in which Figure 7a shows the GRP outer skin 82 of a side wall 90 formed using a panel in accordance wit the invention, Figure 7b shows the side wall 90 with cladding 84 partially applied thereto. Figure 7c illustrates the side wall 82 with the cladding 84 fully applied and leaving portions of the GRP outer skin 82 exposed to view so as to provide a visual effect which enhances the appearance of the windows 86 in the side wall.

The use of a fully composite finished roof panel 68 also reduces the occurrence of condensation issues which occur in conventional structures and which can cause mould and bulk water build up in the roof cavity spoiling internal wall and ceiling boards as well as causing potential electrical problems. The use of the composite panels as herein described eliminates the need for the conventional membrane and fixing of the separate pantiles and the possibility of condensation build up.

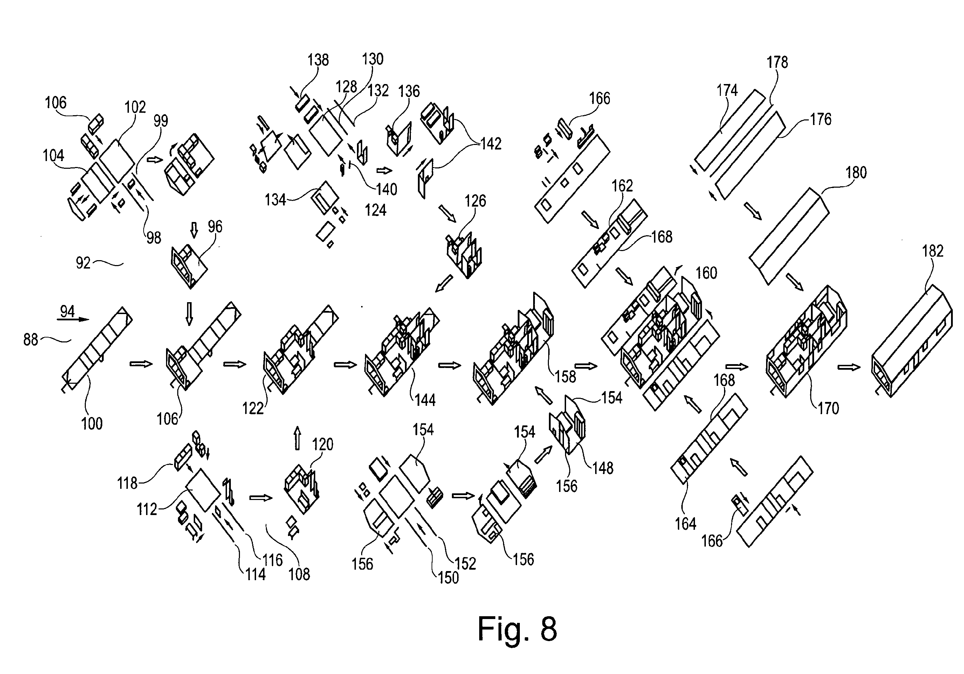

In another embodiment of the invention the structure is formed on a chassis with a series of modules being placed in position and fixed to the chassis. The modules can, for example be lounge, kitchen, bathroom/bedroom and master bedroom modules. The modules are at least partially preassembled in bays at the side of the main production line and an example of the method used is provided in Figure 8 where the assembly line 88 for the structure is shown.

As illustrated in Figure 8, a number of preassembly bays are provided as part of the assembly process. At the start of the assembly line 88 in this embodiment there is provided a chassis 100 formed of a prefabricated metal frame and on which the structure is to be formed. The chassis is moved in the direction of arrow 94 along the production line.

In bay 92 the lounge module 96 is formed. Support rails 98,99 are screwed and glued to a composite panel 102 which is to form part of the floor of the structure. The panel 102 is pre fitted with floor coverings and pre assembled lounge furniture 106 is secured to the floor. The composite front wall panel 104 is then screwed and glued to the floor in a perpendicular position to the floor, with the screws typically only required to hold the panels in place until the adhesive cures. The module 96 is then secured onto the base chassis 100 with structural fixings to provide the structure in the form shown at position 106.

In bay 108 the kitchen module 110 is formed and, as with bay 92 the floor panel 112 is pre fitted with support rails 114 ,116 and floor coverings. Pre assembled kitchen units 118 can then be secured to the floor and at this stage the operative has full access to the open side of the kitchen units allowing gas and mains water service pipes 120 to be installed from the open space at the back of the units. The completed module 110 is then lifted on to the chassis 100 and fixed to the chassis to provide the same to the condition shown at position 122. Typically adhesive is used to bond the respective edges of the floors of the kitchen and lounge modules. Other apparatus such as ovens, dishwashers and fridges can also be fitted to the floor and assembled into final position when the structure is complete.

In bay 124 the bedroom and bathroom module 126 is formed and as in the other bays the floor 128 is pre assembled with rails 130,132 and floor coverings. A partition wall 136 which is to be positioned adjacent to the kitchen when the structure is formed is pre fitted with wall mounted kitchen units while the wall is in a substantially horizontal position. The beds 138 are secured to the floor, as is the toilet pan and the shower cubicle 140, and waste pipes are fed through apertures in the floor. At this stage access is fully open to the shower faucet hot and cold water supply which eases the provision of the plumbing. The partition 136, corridor walls are then secured to the floor 128 and the partition wall 136 can also have the head boards for the beds fitted to the opposite side from the kitchen units. The completed module 126 is then lifted on to the chassis to bring the same to the condition shown at 144 and fixed in position on the chassis.

In Bay 146 a further bedroom module 148 is formed and is pre fitted with floor coverings and support rails 150, 152. The bed is secured to the floor and any or any combination of a pre assembled wardrobe, vanity table, head board and bedside cabinets are fixed to the rear wall 154 and partition wall 156. The completed module 148 is then lifted on to the chassis 100 and fixed in position to bring the chassis to the condition shown in at 158..

In bay 160 any furniture which is required to be fixed to the side walls 162, 164 of the structure is fitted before the walls are placed onto the chassis of the structure. This can include any or any combination of a fire cab, wardrobes, kitchen wall units, toilet cistern.

Typically any window assemblies 166, guttering and any cladding are also fitted at this stage to the free standing side wall. The side walls are then lifted onto the chassis 100, and the bottom edge 168 of each of the side walls are fully supported on the protruding ends of the support rails which are provided as part of the modules and which are in position on the chassis. The sidewalls 162 164 are secured and bonded to the floor, with any securing screws used typically only required to hold the side wall to the floor until the adhesive cures. The front and rear external walls and partition walls are secured to the side walls from the inside of the structure which is now formed as shown at 170.

In bay 172 the roof panels 174, 176 are secured and glued together through a ridge cap extrusion 178. The completed roof assembly 180 is then lifted on to the top of the side walls and secured and glued to the side walls. In one embodiment a "knock-in" plastic finisher is then fitted to the extrusion forming a coving appearance to the inside of the roof joint.

Thus the structure is formed in accordance with the invention and as shown at position 182 at the end of the assembly line 88.

The present invention therefore provides a static home structure with increased strength and rigidity in comparison with conventional static homes whilst at the same time allowing greater flexibility in the design of the static home internal layout and greater efficiency in the manufacture of the same. Other advantages which are obtained is that in refurbishment of the static homes certain sections or modules can be removed and refurbished or replaced without requiring the whole structure to be worked on.

## Claims

1. A static home structure, said structure comprising a base with side walls and end walls depending upwardly therefrom, and a roof, said base supported a distance from a support surface by one or more support members and/or wheel assembly and any or any combination of said base, side walls, end walls, and/or roof is formed of at least one panel which includes an internal surface layer and an external surface layer which are spaced apart by an intermediate layer of insulating material.

2. A structure according to claim 1 wherein in addition to the insulating material there is provided a frame which acts to retain the internal and external layers in a spaced arrangement.

3. A structure according to claim 1 wherein the base includes a chassis with a wheel assembly and support members and panels mounted thereon to form the floor of the structure.

4. A structure according to claim 1 wherein the base is formed by one or more of the said panels which act as the chassis and floor and include one or more members to which a wheel assembly and/or support members are connected.

5. A structure according to claim 1 wherein the internal and external layers of the panel and the insulation material and/or frame are adhered together to form a substantially unitary composite panel.

6. A structure according to claim 1 wherein the external layer of the panels receive a further layer of material to provide a decorative and/or reinforcing effect.

7. A structure according to claim 1 wherein the respective base, side walls, end walls and roof are joined together using an adhesive.

8. A structure according to any of the preceding claims wherein, the structure is formed from one or more modules.

9. A structure according to claim 8 wherein the modules are at least partially fitted furnishings and/or services fittings prior to placement of the module in position as part of the structure.

10. A structure according to claim 1 wherein the base is spaced from a support surface by the wheel assembly and supporting members.

11. A structure according to claim 10 wherein the structure includes one or more storage containers and/or animal kennels located between the base and the support surface.

12. A structure according to claim 11 wherein the storage containers and/or kennels are accessible from the internal cavity of the structure and through the base therein.

13. A structure according to claim 10 wherein the space between the base and the support surface is utilised for the location of water storage, water heating means and/or other storage uses and/or may be provided with means to aid the floatation of the structure.

14. A method of manufacture of a static home structure, said method comprising the steps of forming the base, side walls, end walls and/or roof from panels comprising first and second layers of sheet material spaced apart by an intermediate layer of insulation material, forming the panels to the required shapes, forming a plurality of modules representing different parts of the structure, placing and securing the modules, once formed, in position on a chassis to form the internal structure with end walls, and securing the side walls and roof panels to the chassis and/or modules to enclose and complete the formation of the structure.

15. A method according to claim 14 wherein the internal cavity is enclosed by joining the roof to the end and side walls.

16. A method according to claim 14 wherein the method includes providing a wheel assembly and/or support members to allow the base to be spaced from a support surface via said support members and/or wheel assembly.
